# FASCICULE DE BREVET EUROPEEN

(11) **EP 3 629 415 B1**
(45) Date de publication et mention de la délivrance du brevet: **30.06.2021**
(21) Numéro de dépôt: 18196555.9
(22) Date de dépôt: 25.09.2018
(51) Int. Cl.: H02J 7/00, H02J 7/34, H01M 10/48, B60L 3/00, B60L 58/12, B60L 58/18, B60L 58/21, B60L 58/22, H04B 3/52, H04B 5/00

(54) **SYSTÈME DE GESTION D'AU MOINS UN SOUS-ENSEMBLE D'UNE BATTERIE ÉLECTRIQUE**
SYSTEM ZUR STEUERUNG MINDESTENS EINER UNTEREINHEIT EINER ELEKTRISCHEN BATTERIE
SYSTEM FOR MANAGING AT LEAST ONE SUBASSEMBLY OF AN ELECTRIC BATTERY

(43) Date de publication de la demande: 01.04.2020
(73) Titulaire: EM Microelectronic-Marin SA, 2074 Marin (CH)
(72) Inventeur: Scordilis, Thierry, 2036 Cormondrèche (CH); Saby, Jérôme, 2013 Colombier (CH); Casagrande, Arnaud, 2014 Bôle (CH); De Rosa, Luca, 2013 Colombier (CH)
(74) Mandataire: ICB SA

(56) Documents cités:
- DE-A1-102014 222 440
- US-B1- 6 184 656
- US-B1- 9 970 993
- CHRISTY LARRY ET AL: "A new class of lightweight, multifunctional material for electromagnetic compatibility", 2017 IEEE INTERNATIONAL SYMPOSIUM ON ELECTROMAGNETIC COMPATIBILITY & SIGNAL/POWER INTEGRITY (EMCSI), IEEE, 7 août 2017 (2017-08-07), pages 11-16, XP033232403, DOI: 10.1109/ISEMC.2017.8077833 ISBN: 978-1-5386-2229-2 [extrait le 2017-10-20]

## Description

### DOMAINE TECHNIQUE DE L'INVENTION

L'invention concerne un système de gestion d'au moins un sous-ensemble d'une batterie électrique.

L'invention concerne également une batterie électrique comprenant le système de gestion et au moins un sous-ensemble muni de plusieurs cellules de stockage d'énergie.

La batterie électrique est par exemple une batterie destinée à équiper un véhicule, par exemple un véhicule automobile, et notamment, mais non exclusivement, une voiture électrique.

### ETAT DE LA TECHNIQUE

Afin d'être capable de fournir des puissances suffisantes, les batteries électriques sont constituées de sous-ensembles. Chacun de ces sous-ensembles regroupe plusieurs cellules de stockage d'énergie. Lors de l'utilisation de ces batteries, il convient de contrôler plusieurs aspects, tels que par exemple le maintien de charge opérationnelle, de recharge et d'utilisation optimales, et la garantie d'intégrité de la batterie. Ces trois aspects sont destinés à garantir la durée de vie de la batterie en prenant en compte la température, l'état de la tension électrique, la réserve d'énergie et la demande instantanée de puissance de l'utilisateur, et ce au niveau de chaque cellule de base de la batterie.

Aujourd'hui, afin d'effectuer ce contrôle et ce suivi de la gestion des cellules, les batteries comportent bien souvent des connexions qui permettent des liaisons filaires entre des capteurs situés au niveau des cellules, et des modules de gestion et de traitement de données situés au niveau des sous-ensembles de la batterie. Les différents modules de gestion communiquent ensuite les données reçues vers un concentrateur. Toutefois, un inconvénient d'un tel système est qu'il implique beaucoup de connexions filaires qui sont difficiles à réaliser, et qui sont coûteuses à produire. De par cette construction, il est également compliqué de maintenir l'intégrité des signaux analogiques ou numériques vis-à-vis de perturbateurs électromagnétiques de signaux, tels que par exemple des moteurs. En outre, le nombre de connexions filaires est tel que ces connexions entraînent un surpoids conséquent pour le système, ainsi qu'une complexité de montage.

Il est également connu de mesurer toutes ces grandeurs au niveau de la cellule de batterie puis de transmettre ces informations en utilisant un bus de données. L'inconvénient réside alors dans le débit limité que l'on peut obtenir avec des circuits simples, peu consommateurs.

Si cette transmission est effectuée par radio fréquences de façon rayonnée en champ libre, comme décrit par exemple dans le document brevet US 6,184,656 B1, cela supprime les connexions filaires, mais pose néanmoins le problème du rayonnement électromagnétique, que ce dernier soit intentionnel ou parasite. Cela s'avère particulièrement problématique lorsque la batterie électrique équipe un véhicule. Des problèmes de compatibilité électromagnétique au sein du véhicule peuvent ainsi apparaître. D'autres inconvénients de la transmission par radio fréquences sont les problèmes de propagation pure entre les cellules d'un sous-ensemble donné, et au niveau de la batterie, ainsi que la conception des systèmes d'antennes spécifiques à chaque batterie. Ces derniers sont en effet très souvent constitués de boîtes métalliques en fer, qui se comportent du point de vue électromagnétique comme des cages de Faraday.

### RESUMÉ DE L'INVENTION

L'invention a donc pour but de fournir un système de gestion d'au moins un sous-ensemble d'une batterie électrique, permettant de réduire le nombre de connexions filaires au sein du système, tout en permettant un suivi de gestion des cellules en temps réel ou quasi temps réel avec un débit élevé, et sans utiliser de rayonnement électromagnétique en champ libre, et palliant les inconvénients susmentionnés de l'état de la technique.

A cet effet, l'invention concerne un système de gestion d'au moins un sous-ensemble d'une batterie électrique, le ou chaque sous-ensemble comprenant une pluralité de cellules de stockage d'énergie, qui comprend les caractéristiques mentionnées dans la revendication indépendante 1.

Des formes particulières du système de gestion sont définies dans les revendications dépendantes 2 à 10.

Un avantage de la présente invention réside dans le fait que chaque circuit de communication associé à une cellule de stockage d'énergie est configuré pour transposer, sur une fréquence porteuse de valeur supérieure ou égale à 1 GHz, les données à recevoir et à transmettre, et que le système de gestion comporte, pour le ou chaque sous-ensemble, un câble à pertes reliant les cellules de stockage d'énergie de ce sous-ensemble. Le câble à pertes est couplé par couplage capacitif au circuit de communication de chaque cellule de stockage d'énergie. Ceci permet d'éviter tout contact galvanique entre les circuits de communication et le câble à pertes, et permet ainsi de réduire le nombre de connexions filaires au sein du système, puisqu'il n'y a en outre qu'un seul câble à pertes par sous-ensemble de la batterie.

En outre, une telle fréquence porteuse de valeur supérieure ou égale à 1 GHz permet d'obtenir des débits de transmission très élevés, permettant une transmission ou une réception des données en un temps très court, à haute fréquence de communication et très haut débit. Ceci permet un suivi de gestion des cellules en temps réel ou quasi temps réel avec un débit très élevé. Grâce au système de gestion selon l'invention, il est ainsi par exemple possible de surveiller une centaine de cellules de stockage d'énergie d'une batterie électrique à une vitesse supérieure à 1000 Hz, une telle vitesse étant de 10 à 100 fois supérieure à la vitesse nécessaire, avec les systèmes de gestion de l'art antérieur, pour surveiller le même nombre de cellules de stockage d'énergie. Ceci permet une gestion plus fine et optimale de la batterie électrique, en particulier de sa consommation, dans toutes les phases d'utilisation de la batterie.

Enfin, un autre avantage du système selon l'invention est qu'il ne produit pas de rayonnement électromagnétique à l'intérieur du ou des sous-ensembles de la batterie électrique. Ceci permet d'éviter l'apparition de problèmes de compatibilité électromagnétique, et évite également la conception de systèmes d'antennes spécifiques à la batterie. En effet, dans la présente invention, la transmission ou la réception des données au sein de chaque sous-ensemble de la batterie électrique s'effectue via un couplage capacitif, en mode de propagation par ondes radiofréquences guidées, et non via un rayonnement radiofréquences en champ libre. Un tel mode de propagation par ondes radiofréquences guidées permet en outre de se prémunir contre des perturbateurs électromagnétiques, tels que des moteurs par exemple.

Avantageusement, la valeur de la fréquence porteuse est sensiblement égale à 5.7 GHz. Cette valeur de 5.7 GHz permet d'obtenir une largeur de bande significative, permettant d'optimiser le débit de transmission et le suivi de gestion en temps réel ou quasi temps réel, tout en conservant des circuits électroniques simples et peu onéreux. En particulier, cette valeur de fréquence porteuse de 5.7 GHz autorise des débits très élevés de l'ordre de plusieurs dizaines de méga bit par seconde. Cependant cette fréquence porteuse peut aussi être à 2.45 GHz.

Selon une caractéristique technique particulière de l'invention, le système de gestion comporte en outre, pour chaque cellule de stockage d'énergie, des moyens de couplage capacitif reliés électriquement au circuit de communication de la cellule, et le câble à pertes est couplé au circuit de communication de chaque cellule de stockage d'énergie via les moyens de couplage capacitif.

Selon un premier mode de réalisation de l'invention, le câble à pertes est constitué d'une paire torsadée comprenant deux brins.

Selon un deuxième mode de réalisation de l'invention, le câble à pertes présente une forme coaxiale.

Avantageusement, les moyens de couplage capacitif peuvent être constitués d'un anneau de passage du câble, l'anneau comprenant sur sa surface intérieure un revêtement métallique, le câble à pertes étant inséré dans l'anneau de chaque cellule de stockage d'énergie. Ceci permet de coupler très facilement le câble à pertes de chaque sous-ensemble aux circuits de communication des cellules de stockage d'énergie de ce sous-ensemble. En effet, aucune connexion filaire électrique n'est requise, et il suffit d'insérer le câble à pertes dans les anneaux des cellules de stockage d'énergie prédisposés à cet effet.

Avantageusement, le circuit de gestion et le circuit de communication de chaque cellule de stockage d'énergie sont alimentés électriquement par ladite cellule de stockage d'énergie. Ceci permet, pour chaque cellule de stockage d'énergie de la batterie électrique, de dissocier les circuits de gestion et de communication du circuit de puissance de la batterie. Ainsi, les circuits de gestion et de communication ne sont pas alimentés via le circuit de puissance de la batterie électrique, ce qui permet de conserver la puissance électrique contenue dans ce dernier pour assurer les fonctions habituelles associées au circuit de puissance.

A cet effet, l'invention concerne également une batterie électrique comprenant au moins un sous-ensemble muni d'une pluralité de cellules de stockage d'énergie, et un système de gestion du ou des sous-ensemble(s) décrit ci-dessus, et qui comprend les caractéristiques mentionnées dans la revendication dépendante 11.

Des formes particulières de la batterie électrique sont définies dans les revendications dépendantes 12 et 13.

Selon une caractéristique technique particulière de l'invention, la batterie électrique comprend en outre un organe central de concentration et de traitement de données, et, pour le ou chaque sous-ensemble, un module de gestion de l'état du sous-ensemble et un module de communication, le module de communication du ou de chaque sous-ensemble étant couplé d'une part au câble à pertes dudit sous-ensemble et relié d'autre part à l'organe central de concentration et de traitement de données.

Avantageusement, l'organe central de concentration et de traitement de données comprend une unité informatique configurée pour modifier dynamiquement la frontière entre la communication montante de données provenant des cellules de stockage d'énergie, et la communication descendante de données vers les cellules de stockage d'énergie. Ceci permet d'adapter dynamiquement les niveaux de transmission et de réception de données, afin de faciliter la transmission de données à haut débit et de faire en sorte que la réception des données soit agréable pour un récepteur. A titre d'exemple, avec un débit de 26 méga bit par seconde, il est ainsi possible de transmettre ou de recevoir 64 octets en modifiant dynamiquement la frontière entre transmission et réception.

### BRÈVE DESCRIPTION DES FIGURES

Les buts, avantages et caractéristiques du système de gestion selon l'invention, ainsi que de la batterie électrique le comprenant, apparaîtront mieux dans la description suivante sur la base d'au moins une forme d'exécution non limitative illustrée par les dessins sur lesquels :
- la figure 1 est une vue schématique d'une batterie électrique comprenant trois sous-ensembles, et un système de gestion des trois sous-ensembles,
- la figure 2 est une vue schématique d'une partie du système de gestion de la figure 1, associée à un des sous-ensembles de la batterie électrique, et comprenant un câble à pertes,
- la figure 3 est une vue de dessous d'un exemple de réalisation de moyens de couplage capacitif couplant le câble à pertes de la figure 2, selon une première variante de réalisation, à des circuits de communication associés aux cellules de stockage d'énergie,
- la figure 4 est une vue en coupe, prise selon un plan de coupe IV-IV, des moyens de couplage capacitif de la figure 3,
- la figure 5 est une vue en perspective du câble à pertes de la figure 2, selon une deuxième variante de réalisation, et
- la figure 6 est un chronogramme représentant un exemple d'un transfert de données entre des cellules de stockage d'énergie du sous-ensemble de batterie électrique de la figure 2, et un module de gestion de l'état du sous-ensemble.

### DESCRIPTION DETAILLEE DE L'INVENTION

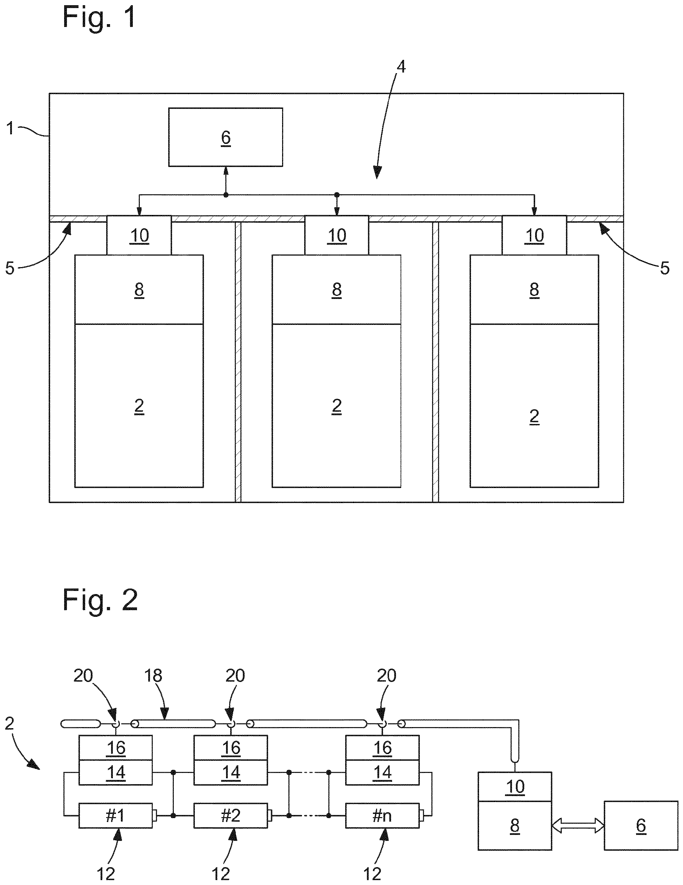

La figure 1 représente une batterie électrique 1, qui comprend plusieurs sous-ensembles 2 et un système 4 de gestion des sous-ensembles 2. Les sous-ensembles 2 sont par exemple disposés dans des compartiments 5 de la batterie électrique 1. De tels compartiments 5, formés par exemple chacun d'un boitier muni de parois métalliques, permettent de séparer les sous-ensembles 2. Cette compartimentation de la batterie électrique 1 est particulièrement utile dans le cas où la batterie électrique 1 équipe un véhicule de type voiture électrique. En effet, elle permet alors de répondre au problème de l'assemblage mécanique dans le plancher d'une telle voiture. Dans l'exemple illustratif de la figure 1, la batterie électrique 1 comprend trois sous-ensembles 2. Dans le cas où la batterie électrique 1 équipe un véhicule de type voiture électrique, la batterie 1 peut comporter de l'ordre d'une vingtaine de sous-ensembles 2. De préférence, la batterie électrique 1 comprend également un organe central 6 de concentration et de traitement de données, et, pour chaque sous-ensemble 2, un module 8 de gestion de l'état du sous-ensemble 2 et un module de communication 10. Ainsi, dans l'exemple illustratif de la figure 1, la batterie électrique 1 comprend trois modules de gestion 8 et trois modules de communication 10.

Chaque sous-ensemble 2 de la batterie électrique 1 comprend plusieurs cellules 12 de stockage d'énergie. Dans l'exemple de réalisation de la figure 2, chaque sous-ensemble 2 comprend un nombre n de cellules 12 de stockage d'énergie. Dans le cas où la batterie électrique 1 équipe un véhicule de type voiture électrique, chaque sous-ensemble 2 de la batterie 1 peut comporter de l'ordre d'une trentaine de cellules 12 de stockage d'énergie.

Comme illustré sur la figure 2, les cellules 12 de stockage d'énergie au sein d'un même sous-ensemble 2 sont reliées entre elles, typiquement en série. Chaque cellule 12 de stockage d'énergie forme une cellule électrochimique élémentaire, l'ensemble des cellules 12 permettant le stockage de l'énergie au sein de la batterie 1.

Comme représenté sur la figure 2, le système 4 de gestion des sous-ensembles 2 comporte, pour chaque cellule 12 de stockage d'énergie, un circuit 14 de gestion de l'état de la cellule 12 et un circuit de communication 16. Le système de gestion 4 comporte également, pour chaque sous-ensemble 2, un câble à pertes 18 reliant les cellules 12 de stockage d'énergie de ce sous-ensemble 2. De préférence, le système de gestion 4 comporte en outre, pour chaque cellule 12 de stockage d'énergie, des moyens de couplage capacitif 20 reliés électriquement au circuit de communication 16 de la cellule 12.

Le circuit 14 de gestion de l'état d'une cellule 12 de stockage d'énergie est configuré pour surveiller l'état de la cellule 12, comme par exemple l'état de charge, la consommation, la température et/ou le niveau de tension de la cellule 12. Pour ce faire, le circuit de gestion 14 comporte par exemple plusieurs capteurs électroniques dédiés. Le circuit 14 de gestion de l'état d'une cellule 12 comporte deux bornes, chacune des bornes étant reliée à une borne respective de la cellule 12. Ainsi, chaque circuit de gestion 14 est connecté en parallèle de la cellule 12 qu'il surveille. Comme visible sur la figure 2, les circuits de gestion 14 au sein d'un même sous-ensemble 2 sont en outre reliés entre eux, typiquement en série.

Le circuit de communication 16 d'une cellule 12 de stockage d'énergie est configuré pour recevoir et transmettre des données relatives à la cellule 12. Les données à transmettre sont par exemple des données de mesure de l'état de charge de la cellule 12, de sa consommation électrique, de sa température et/ou du niveau de tension à ses bornes. Les données à recevoir sont par exemple des requêtes de mesure de ces différentes grandeurs. Le circuit de communication 16 de chaque cellule 12 est configuré en outre pour transposer, sur une fréquence porteuse dont la valeur est supérieure ou égale à 1 GHz, les données à recevoir et à transmettre. Le circuit de communication 16 est par exemple configuré pour effectuer une telle transposition de données via une modulation d'amplitude et/ou via une modulation de fréquence. De préférence, la valeur de la fréquence porteuse est sensiblement égale à 5.7 GHz. Cependant cette fréquence porteuse peut aussi être à 2.45 GHz.

Pour chaque cellule de stockage d'énergie 12, le circuit 14 de gestion de l'état de la cellule et le circuit de communication 16 sont par exemple chacun intégrés sur une carte de circuit imprimé dédiée. Dans ce cas, les deux cartes de circuit imprimé sont reliées électriquement entre elles. En variante, le circuit 14 de gestion de l'état de la cellule et le circuit de communication 16 peuvent partager une même carte de circuit imprimé.

De préférence, pour chaque cellule de stockage d'énergie 12, le circuit 14 de gestion de l'état de la cellule et le circuit de communication 16 sont alimentés électriquement par la cellule de stockage d'énergie elle-même. Ces deux circuits 14, 16 sont ainsi complètement dissociés du circuit de puissance de la batterie électrique 1, et sont directement alimentés par la cellule de stockage d'énergie 12 à laquelle ils sont associés.

Chaque câble à pertes 18 agit comme un guide d'ondes et est couplé par couplage capacitif au circuit de communication 16 de chaque cellule 12 de stockage d'énergie du sous-ensemble 2 auquel il est associé. Le couplage capacitif est par exemple réalisé grâce aux moyens de couplage capacitif 20, comme illustré sur les figures 2 à 4.

En revenant aux figures 1 et 2, le module de communication 10 de chaque sous-ensemble 2 est couplé d'une part au câble à pertes 18 de ce sous-ensemble 2, et est relié d'autre part à l'organe central 6 de concentration et de traitement de données. Le module de communication 10 de chaque sous-ensemble constitue un nœud intermédiaire, permettant de faire transiter les données relatives aux cellules 12 de ce sous-ensemble, depuis l'organe central 6 vers les cellules 12, et inversement. Le module de communication 10 de chaque sous-ensemble 2 est couplé à un module 8 de gestion de l'état de ce sous-ensemble 2. Chaque module de gestion 8 est configuré pour gérer l'état des cellules 12 du sous-ensemble 2 auquel il est associé, comme par exemple l'état de charge, la consommation, la température et/ou le niveau de tension des cellules 12.

De préférence, l'organe central 6 de concentration et de traitement de données comprend une unité informatique configurée pour modifier dynamiquement la frontière entre la communication montante de données provenant des cellules de stockage d'énergie 12, et la communication descendante de données vers les cellules de stockage d'énergie 12.

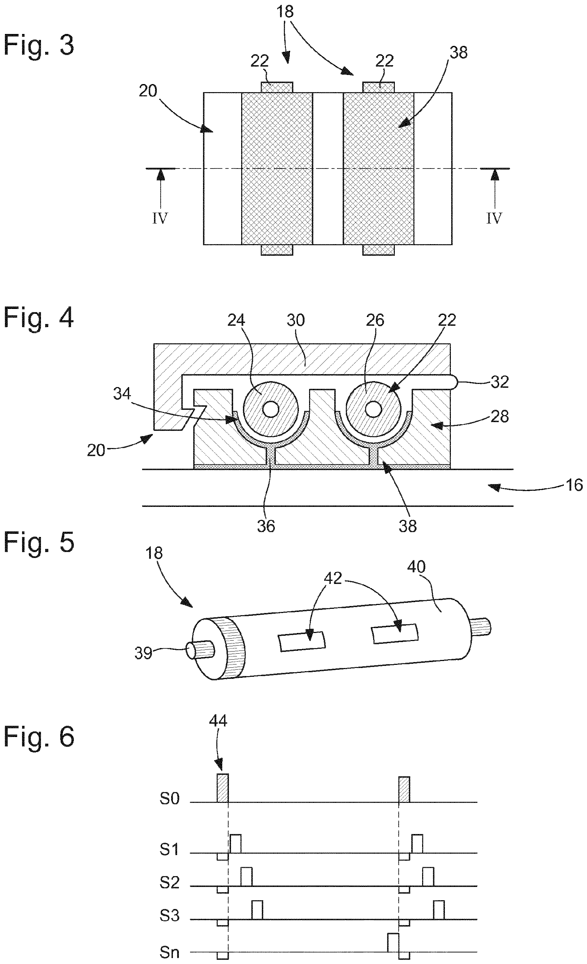

Un premier mode de réalisation de l'invention va maintenant être décrit en référence aux figures 3 et 4. Selon ce premier mode de réalisation, le câble à pertes 18 est constitué d'une paire torsadée comprenant deux brins 22. Comme illustré sur la figure 4, chaque brin 22 est constitué d'une âme 24, et d'une gaine isolante 26 entourant l'âme 24. Sur la figure 3 est représenté le circuit de communication 16 d'une cellule de stockage d'énergie 12, le câble à pertes 18 sous forme de paire torsadée, et les moyens de couplage capacitif 20 selon ce premier mode de réalisation. Selon l'exemple de réalisation représenté sur la figure 3, le câble à pertes 18 est agencé au-dessus du circuit de communication 16, et les moyens 20 couplent le câble à pertes 18 au circuit de communication 16, par couplage capacitif.

Selon ce premier mode de réalisation, les moyens de couplage capacitif 20 sont constitués d'une pièce de séparation des brins 22. La pièce de séparation 20 est insérée entre d'une part les deux brins 22 de la paire torsadée 18, et d'autre part le circuit de communication 16 de la cellule de stockage d'énergie 12. Plus précisément, comme illustré sur la figure 4, la pièce de séparation 20 comprend un socle en plastique 28 sur lequel est monté un couvercle mobile 30. Le couvercle mobile 30 est par exemple monté sur le socle en plastique 28 via un moyen 32 formant charnière. Le socle en plastique 28 définit deux cavités longitudinales semi-cylindriques 34, la direction longitudinale étant prise comme la direction d'extension du câble à pertes 18. A l'intérieur de chaque cavité semi-cylindrique 34, sensiblement au centre de la cavité 34 et sur toute la longueur du socle 28, est ménagée une rainure longitudinale 36 traversant l'épaisseur du socle 28 pour déboucher à l'extérieur de ce dernier. La pièce 20 comprend en outre un revêtement métallique 38, le revêtement métallique 38 s'étendant de manière continue sur le fond de chaque cavité semi-cylindrique 34, à l'intérieur des rainures longitudinales 36, et sur l'extérieur du socle 28 pour former une piste conductrice sur une face extérieure du socle 28.

En position d'utilisation de la pièce de séparation 20, le socle 28 est disposé sur le circuit de communication 16 de la cellule de stockage d'énergie 12, la face du socle 28 sur laquelle s'étend le revêtement métallique 38 étant en contact avec le circuit 16. Les deux brins 22 de la paire torsadée 18 s'étendent chacun dans une cavité semi-cylindrique 34 correspondante. Le couvercle mobile 30 est en position de fermeture et vient se refermer sur les brins 22. Le signal de données est présent sur le revêtement métallique 38, et la pièce de séparation 20 permet de coupler, par couplage capacitif, la paire torsadée 18 au circuit de communication 16.

Un deuxième mode de réalisation de l'invention va maintenant être décrit en référence à la figure 5. Selon ce deuxième mode de réalisation, le câble à pertes 18 présente une forme coaxiale. Le câble à pertes 18 comprend une âme 39, un blindage externe 40 entourant l'âme 39, et plusieurs fentes 42 ménagées dans le blindage externe 40. Dans l'exemple de réalisation de la figure 5, les fentes 42 sont des fentes longitudinales, la direction longitudinale étant prise comme la direction d'extension du câble à pertes 18. Les fentes 42 sont ménagées dans le plan de masse du blindage externe 40, permettant ainsi de rendre le câble 18 à pertes.

Comme représenté sur la figure 2, selon ce deuxième mode de réalisation, les moyens de couplage capacitif 20 sont constitués d'un anneau de passage du câble 18. L'anneau comprend sur sa surface intérieure un revêtement métallique, et le câble à pertes 18 est inséré dans l'anneau 20 de chaque cellule de stockage d'énergie 12. Le revêtement métallique de l'anneau 20 est par exemple relié au circuit de communication 16 de la cellule 12 via une ligne électrique micro-ruban. Une telle ligne électrique sert de guide à une propagation d'onde électromagnétique, et est constituée d'un ruban conducteur déposé sur un substrat diélectrique dont la seconde face métallisée fait office de plan de masse. Le signal de données est ainsi présent sur le revêtement métallique de l'anneau 20, et l'anneau 20 permet de coupler, par couplage capacitif, le câble coaxial 18 au circuit de communication 16.

Il peut être envisagé sans être représenté que le câble coaxial est collé sur la batterie et le couplage capacitif est entre les éléments de batterie, c'est-à-dire entre le câble à perte et un micro-ruban sur le module électronique.

La figure 6 est un chronogramme représentant un protocole de transfert de données synchronisé au sein d'un des sous-ensembles 2 de la batterie électrique 1, selon un exemple de réalisation. Sur cette figure sont représentés différents signaux de déclenchement du transfert de données. Un premier signal S₀ correspond à un signal d'horloge, indiquant un instant de départ 44 permettant le déclenchement du protocole de transfert de données synchronisé. Le premier signal S₀ est émis au niveau du module 8 de gestion de l'état du sous-ensemble 2, puis est transmis aux différents circuits 14 de gestion de l'état des cellules 12, via le module de communication 10, le câble à pertes 18, les moyens de couplage capacitif 20 et les circuits de communication 16. Après la réception de ce premier signal S₀ les différents circuits de gestion 14 font remonter vers le module de gestion 8, de manière séquentielle, des données relatives aux cellules 12 du sous-ensemble 2. Ainsi, chaque circuit de gestion 14, correspondant à une cellule de stockage d'énergie 12, émet un signal respectif S₁, S₂, S₃,...Sₙ transportant des données relatives à l'état de la cellule 12. Les différents signaux S₁, S₂, S₃,...Sₙ sont émis de manière séquentielle et régulière vers le module de gestion 8, à la suite de la réception du premier signal S₀ par tous les circuits de gestion 14. Le module 8 de gestion du sous-ensemble 2 fait alors remonter les données reçues vers l'organe concentrateur 6. Un tel protocole synchronisé permet d'optimiser le transfert d'information entre les cellules de stockage d'énergie 12 et l'organe concentrateur 6.

## Revendications

1. Système (4) de gestion d'au moins un sous-ensemble (2) d'une batterie électrique (1), le ou chaque sous-ensemble (2) comprenant une pluralité de cellules de stockage d'énergie (12), le système (4) comportant, pour chaque cellule de stockage d'énergie (12), un circuit (14) de gestion de l'état de la cellule et un circuit de communication (16), le circuit de communication (16) étant configuré pour recevoir et transmettre des données relatives à la cellule (12),
**caractérisé en ce que** le circuit de communication (16) est configuré pour transposer, sur une fréquence porteuse, les données à recevoir et à transmettre, la valeur de ladite fréquence porteuse étant supérieure ou égale à 1 GHz, et **en ce que** le système de gestion (4) comporte en outre, pour le ou chaque sous-ensemble (2), un câble à pertes (18) reliant les cellules de stockage d'énergie (12) dudit sous-ensemble (2), et **en ce que** ledit câble à pertes (18) agit comme un guide d'ondes et est couplé, pour chaque cellule de stockage d'énergie (12), par des moyens de couplage capacitif (20) reliés électriquement au circuit de communication (16) de la cellule (12), les cellules de stockage d'énergie (12) au sein d'un même sous-ensemble (2) étant reliées entre elles en série.

2. Système de gestion (4) selon la revendication 1, **caractérisé en ce que** la valeur de la fréquence porteuse est sensiblement égale à 5.7 GHz.

3. Système de gestion (4) selon l'une quelconque des revendications précédentes, **caractérisé en ce que** le câble à pertes (18) est constitué d'une paire torsadée comprenant deux brins (22).

4. Système de gestion (4) selon la revendication 3 lorsqu'elle dépend de la revendication 1, **caractérisé en ce que** les moyens de couplage capacitif (20) sont constitués d'une pièce de séparation des brins, ladite pièce étant insérée entre d'une part les deux brins (22) de la paire torsadée (18), et d'autre part le circuit de communication (16) de la cellule de stockage d'énergie (12).

5. Système de gestion (4) selon la revendication 4, **caractérisé en ce que** la pièce de séparation (20) comprend un revêtement métallique (38) et un socle en plastique (28), ledit socle en plastique (28) définissant deux cavités longitudinales semi-cylindriques (34) et deux rainures longitudinales traversantes (36), chaque rainure longitudinale traversante (36) s'étendant sensiblement au centre d'une des cavités (34) sur toute la longueur du socle (28), le revêtement métallique (38) s'étendant de manière continue sur le fond de chaque cavité semi-cylindrique (34), à l'intérieur des rainures longitudinales (36), et sur l'extérieur du socle (28) pour former une piste conductrice sur une face extérieure du socle (28), les deux brins (22) de la paire torsadée (18) s'étendant chacun dans une des cavités semi-cylindriques (34).

6. Système de gestion (4) selon l'une quelconque des revendications 1 et 2, **caractérisé en ce que** le câble à pertes (18) présente une forme coaxiale.

7. Système de gestion (4) selon la revendication6, **caractérisé en ce que** le câble à pertes (18) comprend une pluralité de fentes (42) ménagées dans un blindage externe (40) du câble (18).

8. Système de gestion (4) selon la revendication 6 ou 7 lorsqu'elle dépend de la revendication 1, **caractérisé en ce que** les moyens de couplage capacitif (20) sont constitués d'un anneau de passage du câble, l'anneau comprenant sur sa surface intérieure un revêtement métallique, le câble à pertes (18) étant inséré dans l'anneau de chaque cellule de stockage d'énergie (12).

9. Système de gestion (4) selon l'une quelconque des revendications précédentes, **caractérisé en ce que** le circuit de communication (16) de chaque cellule de stockage d'énergie (12) est configuré pour transposer par modulation d'amplitude et/ou de fréquence, sur la fréquence porteuse, les données à recevoir et à transmettre.

10. Système de gestion (4) selon l'une quelconque des revendications précédentes, **caractérisé en ce que** le circuit de gestion (14) et le circuit de communication (16) de chaque cellule de stockage d'énergie (12) sont alimentés électriquement par ladite cellule de stockage d'énergie (12).

11. Batterie électrique (1) comprenant au moins un sous-ensemble (2) et un système (4) de gestion du ou des sous-ensemble(s) (2), le ou chaque sous-ensemble (2) comportant une pluralité de cellules de stockage d'énergie (12), **caractérisée en ce que** le système de gestion (4) est conforme à l'une quelconque des revendications précédentes.

12. Batterie électrique (1) selon la revendication 11, **caractérisée en ce qu'**elle comprend en outre un organe central (6) de concentration et de traitement de données, et, pour le ou chaque sous-ensemble (2), un module (8) de gestion de l'état du sous-ensemble (2) et un module de communication (10), le module de communication (10) du ou de chaque sous-ensemble (2) étant couplé d'une part au câble à pertes (18) dudit sous-ensemble (2) et relié d'autre part à l'organe central (6) de concentration et de traitement de données.

13. Batterie électrique (1) selon la revendication 12, **caractérisée en ce que** l'organe central (6) de concentration et de traitement de données comprend une unité informatique configurée pour modifier dynamiquement la frontière entre la communication montante de données provenant des cellules de stockage d'énergie (12), et la communication descendante de données vers les cellules de stockage d'énergie (12).

## Patentansprüche

1. System (4) zum Steuern mindestens einer Untereinheit (2) einer elektrischen Batterie (1), wobei die oder jede Untereinheit (2) mehrere Energiespeicherzellen (12) umfasst, das System (4) für jede Energiespeicherzelle (12) eine Schaltung (14) zum Steuern des Zustands der Zelle und eine Kommunikationsschaltung (16) umfasst, und die Kommunikationsschaltung (16) so konfiguriert ist, dass sie Daten bezüglich der Zelle (12) empfängt und sendet,
**dadurch gekennzeichnet, dass** die Kommunikationsschaltung (16) konfiguriert ist, um auf einer Trägerfrequenz die zu empfangenden und zu sendenden Daten zu übertragen, wobei der Wert der Trägerfrequenz größer oder gleich 1 GHz ist, dass das Steuersystem (4) ferner für die oder jede Untereinheit (2) ein verlustbehaftetes Kabel (18) aufweist, das die Energiespeicherzellen (12) der Untereinheit (2) verbindet, und dass das verlustbehaftete Kabel (18) als ein Wellenleiter wirkt und für jede Energiespeicherzelle (12) durch kapazitive Kopplungsmittel (20), die mit der Kommunikationsschaltung (16) der Zelle (12) elektrisch verbunden sind, gekoppelt ist, wobei die Energiespeicherzellen (12) in derselben Untereinheit (2) miteinander in Reihe geschaltet sind.

2. Steuersystem (4) nach Anspruch 1, **dadurch gekennzeichnet, dass** der Wert der Trägerfrequenz im Wesentlichen gleich 5,7 GHz ist.

3. Steuersystem (4) nach einem der vorhergehenden Ansprüche, **dadurch gekennzeichnet, dass** das verlustbehaftete Kabel (18) durch ein Twisted-Pair-Kabel mit zwei Adern (22) gebildet ist.

4. Steuersystem (4) nach Anspruch 3, wenn abhängig von Anspruch 1, **dadurch gekennzeichnet, dass** die kapazitiven Kopplungsmittel (20) aus einem Teil zum Trennen der Adern gebildet sind, wobei das Teil zwischen einerseits den beiden Adern (22) des Twisted-Pair-Kabels (18) und andererseits der Kommunikationsschaltung (16) der Energiespeicherzelle (12) eingesetzt ist.

5. Steuersystem (4) nach Anspruch 4, **dadurch gekennzeichnet, dass** das Trennteil (20) eine Metallverkleidung (38) und einen Kunststoffsockel (28) aufweist, wobei der Kunststoffsockel (28) zwei halbzylindrische Längshohlräume (34) und zwei durchgehende Längsnuten (36) definiert, wobei sich jede durchgehende Längsnut (36) im Wesentlichen in der Mitte eines der Hohlräume (34) über die gesamte Länge des Sockels (28) erstreckt, wobei sich die Metallverkleidung (38) auf dem Boden jedes halbzylindrischen Hohlraums (34) innerhalb der Längsnuten (36) und auf der Außenseite des Sockels (28) durchgehend erstreckt, um auf einer Außenfläche des Sockels (28) eine Leiterbahn zu bilden, wobei sich die beiden Adern (22) des Twisted-Pair-Kabels (18) jeweils in einem der halbzylindrischen Hohlräume (34) erstrecken.

6. Steuersystem (4) nach einem der Ansprüche 1 und 2, **dadurch gekennzeichnet, dass** das verlustbehaftete Kabel (18) eine koaxiale Form aufweist.

7. Steuersystem (4) nach Anspruch 6, **dadurch gekennzeichnet, dass** das verlustbehaftete Kabel (18) mehrere Schlitze (42) aufweist, die in einer äußeren Abschirmung (40) des Kabels (18) ausgespart sind.

8. Steuersystem (4) nach Anspruch 6 oder 7, wenn abhängig von Anspruch 1, **dadurch gekennzeichnet, dass** die kapazitiven Kopplungsmittel (20) aus einem Ring für den Durchgang des Kabels gebildet sind, wobei der Ring auf seiner Innenfläche eine Metallverkleidung aufweist, und das verlustbehaftete Kabel (18) in den Ring jeder Energiespeicherzelle (12) eingesetzt ist.

9. Steuersystem (4) nach einem der vorhergehenden Ansprüche, **dadurch gekennzeichnet, dass** die Kommunikationsschaltung (16) jeder Energiespeicherzelle (12) konfiguriert ist, um durch Amplituden- und/oder Frequenzmodulation auf einer Trägerfrequenz die zu empfangenden und zu sendenden Daten zu übertragen.

10. Steuersystem (4) nach einem der vorhergehenden Ansprüche, **dadurch gekennzeichnet**, das die Steuerschaltung (14) und die Kommunikationsschaltung (16) jedes Energiespeichermoduls (12) durch die Energiespeicherzelle (12) elektrisch versorgt werden.

11. Elektrische Batterie (1), umfassend mindestens eine Untereinheit (2) und ein System (4) zum Steuern der einen oder der mehreren Untereinheiten (2), wobei die oder jede Untereinheit (2) mehrere Energiespeicherzellen (12) enthält, **dadurch gekennzeichnet, dass** das Steuersystem (4) ein Steuersystem nach einem der vorhergehenden Ansprüche ist.

12. Elektrische Batterie (1) nach Anspruch 11, **dadurch gekennzeichnet, dass** sie ferner eine Zentraleinheit (6) zum Konzentrieren und Verarbeiten von Daten und für die oder jede Untereinheit (2) ein Modul (8) zum Steuern des Zustands der Untereinheit (2) sowie ein Kommunikationsmodul (10) umfasst, wobei das Kommunikationsmodul (10) der oder jeder Untereinheit (2) einerseits mit dem verlustbehafteten Kabel (18) der Untereinheit (2) gekoppelt ist und andererseits mit der Zentraleinheit (6) zum Konzentrieren und Verarbeiten von Daten verbunden ist.

13. Elektrische Batterie (1) nach Anspruch 12, **dadurch gekennzeichnet, dass** die Zentraleinheit (6) zum Konzentrieren und Verarbeiten von Daten eine Datenverarbeitungseinheit umfasst, die konfiguriert ist, um die Grenze zwischen der stromaufwärts gerichteten Kommunikation von Daten, die von der Energiespeicherzelle (12) stammen, und der stromabwärts gerichteten Kommunikation von Daten zu der Energiespeicherzelle (12) dynamisch zu modifizieren.

## Claims

1. System (4) for managing at least one sub-assembly (2) of an electric battery (1), the one or each sub-assembly (2) comprising a plurality of power storage cells (12), the system (4) including, for each power storage cell (12), a circuit (14) for managing the state of the cell and a communication circuit (16), the communication circuit (16) being configured such that it receives and transmits data relative to the cell (12),
**characterised in that** the communication circuit (16) is configured such that it transposes, over a carrier frequency, the data to be received and to be transmitted, the value of said carrier frequency being greater than or equal to 1 GHz, and **in that** the management system (4) further includes, for the one or for each sub-assembly (2), a loss cable (18) connecting the power storage cells (12) of said sub-assembly (2), and **in that** said loss cable (18) acts as a waveguide and is coupled, for each power storage cell (12), by capacitive coupling means (20) electrically connected to the communication circuit (16) of the cell (12), the power storage cells (12) in the same subassembly (2) being connected to each other in series.

2. Management system (4) according to claim 1, **characterised in that** the value of the carrier frequency is substantially equal to 5.7 GHz.

3. Management system (4) according to any one of the preceding claims, **characterised in that** the loss cable (18) is formed by a twisted pair comprising two strands (22).

4. Management system (4) according to claim 3 when dependent on claim 1, **characterised in that** the capacitive coupling means (20) are formed by a part for separating the strands, said part being inserted between firstly the two strands (22) of the twisted pair (18) and secondly the communication circuit (16) of the power storage cell (12).

5. Management system (4) according to claim 4, **characterised in that** the separating part (20) comprises a metal coating (38) and a plastic base (28), said plastic base (28) defining two semi-cylindrical longitudinal cavities (34) and two longitudinal through-grooves (36), each longitudinal through-groove (36) extending substantially in the centre of one of the cavities (34) over the entire length of the base (28), the metal coating (38) extending in a continuous manner on the bottom of each semi-cylindrical cavity (34), inside the longitudinal grooves (36), and on the outside of the base (28) in order to form a conductive track on an external face of the base (28), the two strands (22) of the twisted pair (18) each extending in one of the semi-cylindrical cavities (34).

6. Management system (4) according to any one of claims 1 and 2, **characterised in that** the loss cable (18) has a coaxial form.

7. Management system (4) according to claim 6, **characterised in that** the loss cable (18) comprises a plurality of slots (42) made in an external shield (40) of the cable (18).

8. Management system (4) according to claim 6 or 7, when dependent on claim 1, **characterised in that** the capacitive coupling means (20) are formed by a cable pass ring, the ring comprising, on the inner surface thereof, a metal coating, the loss cable (18) being inserted into the ring of each power storage cell (12).

9. Management system (4) according to any one of the preceding claims, **characterised in that** the communication circuit (16) of each power storage cell (12) is configured such that it transposes, by amplitude modulation and/or frequency modulation, over the carrier frequency, the data to be received and transmitted.

10. Management system (4) according to any one of the preceding claims, **characterised in that** the management circuit (14) and the communication circuit (16) of each power storage cell (12) are electrically powered by said power storage cell (12).

11. Electric battery (1) comprising at least one sub-assembly (2) and a system (4) for managing the one or more sub-assemblies (2), the one or each sub-assembly (2) including a plurality of power storage cells (12), **characterised in that** the management system (4) is as claimed in any one of the preceding claims.

12. Electric battery (1) according to claim 11, **characterised in that** it further comprises a central member (6) for concentrating and processing data, and, for the one or for each sub-assembly (2), a module (8) for managing the state of the sub-assembly (2) and a communication module (10), the communication module (10) of the one or of each sub-assembly (2) being coupled firstly to the loss cable (18) of said sub-assembly (2) and connected secondly to the central data concentration and processing member (6).

13. Electric battery (1) according to claim 12, **characterised in that** the central data concentration and processing member (6) comprises a computing unit configured so as to dynamically modify the boundary between the upstream communication of data originating from the power storage cells (12), and the downstream communication of data to the power storage cells (12).
